# EUROPÄISCHE PATENTANMELDUNG

(11) **EP 0 718 353 A1**
(43) Veröffentlichungstag der Anmeldung: **26.06.1996**
(21) Anmeldenummer: 95119339.0
(22) Anmeldetag: 07.12.1995
(51) Int. Cl.: C08K 5/3435

(54) **Polyolefinformmasse mit verbesserter Wärmebeständigkeit**

(30) Priorität: 20.12.1994 DE 4445524
(71) Anmelder: HOECHST AKTIENGESELLSCHAFT, D-65929 Frankfurt am Main (DE)
(72) Erfinder: Borchert, Herbert, D-65795 Hattersheim (DE)

(57) **Zusammenfassung**

Die vorliegende Erfindung betrifft Polyolefinformmassen, vorzugsweise Polypropylenformmassen, mit verringerter Vergilbungsneigung in der Wärme, bei Kontakt mit heißer Kühlerfrostschutzlösung oder bei Sterilisation mit energiereichen Strahlen, die als Grundstabilisator wenigstens ein sterisch gehindertes Amin enthält.

## Beschreibung

Die Erfindung betrifft Polyolefinformmassen, die frei sind von phenolischen Stabilisatoren und die eine verringerte Vergilbungsneigung in der Wärme, bei Kontakt mit heißer Kühlerfrostschutzlösung oder bei Sterilisation mit energiereichen Strahlen besitzen, bevorzugt Polypropylenformmassen.

Polypropylenformmassen enthalten gewöhnlich außer einem Neutralisations- und Gleitmittel zusätzlich einen oder mehrere als Stabilisatoren bezeichnete Additive, die den vollständigen oder zumindest teilweisen Zerfall der Molekülketten durch Hitzeeinwirkung während der thermoplastischen Verarbeitung oder bei Langzeitgebrauch in der Wärme oder bei der Einwirkung energiereicher Strahlen unterbinden, reduzieren oder hinauszögern, je nach Art der Substanzen, ihrer Kombination und ihren Einsatzmengen, wobei die Einsatzmengen durch den Preis der Substanzen, durch Zulässigkeit im Kontakt mit Lebensmitteln oder durch sonstige Eigenschaften der Formmasse gewöhnlich nach oben begrenzt sind.

Wirksam und gebräuchlich sind phenolische Verbindungen vielerlei Art, insbesondere Bis-[3,3-bis-(4'-hydroxy-3'-tertiärbutylphenyl)-butansäurelglykolester (Δ®Hostanox 03) oder Tetrakis-[methylen-(3,5-ditertiärbutyl-4-hydroxy-hydrocinnamat)-methan (Δ®Irganox 1010), allein oder in Verbindung mit teilweise synergistisch wirkenden Costabilisatoren, z.B.Tris-(2,4-ditertiärbutylphenyl)-phosphit (Δ®Hostanox PAR 24), Dioctadecyldisulfid (Δ®Hostanox SE 10), Distearyl-pentaerythrit-diphosphit (Δ®Weston 619 G) oder Distearyl-thio-dipropionat (Δ®Irganox PS 802). Die phenolische Stabilisatoren enthaltenden Polypropylenformmassen haben aber meistens den unerwünschten Nachteil, daß sie während der Verarbeitung, insbesondere bei langanhaltender Einwirkung von Warmluft oder von Kühlerfrostschutzmitteln in wäßriger Lösung oder bei der Sterilisation mit energiereichen Strahlen, stark verfärben oder vergilben. Dieser Vergilbung hat man bisher entgegengewirkt, indem Stabilisatorgemische ohne phenolische Komponente verwendet wurden.

Diese Polypropylenformmassen verfärbten sich zwar weniger, dort wurde jedoch beobachtet, daß die stabilisierende Wirkung stark abnahm, was sich anhand von Rißbildungen, Zunahme des Schmelzflußindex' und Abnahme der Viskositätszahl bemerkbar macht.

Es bestand daher die Aufgabe, eine Polyolefinformmasse, insbesondere eine Polypropylenformmasse, bereitzustellen, die insofern eine verbesserte Wärmebeständigkeit aufweist, als sie bei Langzeiteinwirkung von Wärme nicht zu Vergilbungen neigt und gleichzeitig die Kettenlänge des Polymeren konstant bleibt.

Gelöst wird diese Aufgabe erfindungsgemäß durch eine Formmasse der eingangs genannten Gattung, deren Kennzeichenmerkmale darin zu sehen sind, daß sie als Grundstabilisator wenigstens ein sterisch gehindertes Amin enthält.

Bisher wurden sterisch gehinderte Amine nur als Lichtschutzmittel in Kombination mit phenolischen Stabilisatoren verwendet. Es war überraschend, daß sterisch gehinderte Amine als Hauptwärmestabilisator ohne phenolischen Stabilisator in Polyolefinformmassen, insbesondere in Polypropylenformmassen, hervorragende Wärmestabilität bewirken.

Im Rahmen der vorliegenden Erfindung können die sterisch gehinderten Amine allein oder in Kombination mit Costabilisatoren, z.B. der Art von Tris-(2,4-ditertiärbutylphenyl)-phosphit (Δ®Hostanox PAR 24), Dioctadecyldisulfid (Δ®Hostanox SE 10) oder Distearyl-pentaerythrit-diphosphit (Δ®Weston 619 G), eingesetzt werden.

Erfindungsgemäß sind die sterisch gehinderten Amine in der Polyethylen- oder Polypropylenformmasse in einer Menge von 0,01 bis 5 Gew.-%, vorzugsweise von 0,02 bis 3 Gew.-%, besonders bevorzugt von 0,03 bis 2 Gew.-%, enthalten. Die erfindungsgemäßen Polypropylenformmasse kann zusätzlich eine Menge von 0,01 bis 5 Gew.-%, vorzugsweise 0,02 bis 2 Gew.-% an weiteren nichtphenolischen Costabilisatoren enthalten.

Eine der bevorzugten erfindungsgemäßen Polypropylenformmassen enthält z.B. 100 Gew.-Teile isotaktisches Propylenpolymerisat, 0,4 Gew.-Teile 2,2,4,4-Tetramethyl-7-oxa-3,20-diaza-21-oxo-dispiro-[5.1.11.2]-heneicosan (Δ®Hostavin N 20), 0,2 Gew.-Teile Tris-(2,4-ditertiärbutylphenyl)-phosphit (Δ®Hostanox PAR 24), 0,2 Gew.-Teile Dioctadecyldisulfid (Δ®Hostanox SE 10), 0,1 Gew.-Teile Zinkstearat und 0,05 Gew.-Teile Zinkoxid. Dieses Gemisch kann mit oder ohne vorherige Granulierung zu Formteilen verarbeitet werden und eignet sich besonders zur Weiterverarbeitung zu Kühlwasserausgleichsbehältern für Kraftfahrzeuge.

Eine weitere bevorzugte Polypropylenformmasse enthält z.B. 100 Gew.-Teile Polypropylenpolymerisat, 0,3 Gew.-Teile Poly-[6-[(1,1,3,3-tetramethylbutyl)amino]-1,3,5-triazin-2,4-diyl]-[(2,2,6,6-tetramethyl-4-piperidinyl)imino]-1,6-hexandiyl-[(2,2,6,6-tetramethyl-4-piperidinyl)imino] (9 Cl) (Δ®Chimassorb 944), 0,2 Gew.-Teile Tris-(2,4-ditertiärbutylphenyl)-phosphit (Δ®Hostanox PAR 24), 0,2 Gew.-Teile Distearyl-thio-dipropionat (Δ®Irganox PS 802) und 0,2 Gew.-Teile Calciumstearat. Diese Mischung wird im Hinblick auf die Homogenität der herzustellenden Formteile vor der Verarbeitung zu diesen granuliert. Daraus hergestellte Behältnisse und Verschlüsse zeigten nach Sterilisation mit energiereichen Strahlen wenig Abbau und keine Vergilbung.

Wie bei den vorstehenden Ausführungsbeispielen, sind bei weiteren Beispielen die Verträglichkeiten und Wechselwirkungen der Stabilisatoren untereinander sowie ihre Zulässigkeit und Zweckmäßigkeit hinsichtlich des Kontaktes zu Lebensmitteln zu berücksichtigen.

## Patentansprüche

1. Polyolefinformmasse, die frei ist von phenolischen Stabilisatoren, dadurch gekennzeichnet, daß sie als Hauptwärmestabilisator sterisch gehinderte Amine allein oder in Kombination mit anderen nichtphenolischen Stabilisatoren enthält.

2. Polyolefinformmasse nach Anspruch 1, dadurch gekennzeichnet, daß das Polyolefin ein Polypropylen ist.

3. Polyolefinformmasse gemäß Anspruch 1 oder 2, dadurch gekennzeichnet, daß sie als sterisch gehindertes Amin 2,2,4,4-Tetramethyl-7-oxa-3,20-diaza-21-oxo-dispiro-[5.1.11.2]-heneicosan enthält.

4. Polyolefinformmasse gemäß Anspruch 1 oder 2, dadurch gekennzeichnet, daß sie als sterisch gehindertes Amin Poly-[6-[(1,1,3,3-tetramethylbutyl)amino]-1,3,5-triazin-2,4-diyl]-[(2,2,6,6-tetramethyl-4-piperidinyl)imino]-1,6-hexandiyl-[(2,2,6,6-tetramethyl-4-piperidinyl)imino] (9 Cl) enthält.

5. Polyolefinformmasse nach einem der Ansprüche 1 bis 4, dadurch gekennzeichnet, daß sie das sterisch gehinderte Amin in einer Menge im Bereich von 0,01 bi 5 Gew.-%, bezogen auf das Gesamtgewicht der Formmasse, enthält.

6. Polyolefinformmasse gemäß einem der Ansprüche 1 bis 5, dadurch gekennzeichnet, daß sie als Neutralisationsmittel 0,01 bis 1,0 Gew.-Teile, vorzugsweise 0,1 Gew.-Teile Zinkstearat und/oder 0,01 bis 1,0 Gew.-Teile, vorzugsweise 0,05 Gew.-Teile Zinkoxid enthält.

7. Polyolefinformmasse nach einem der Ansprüche 1 bis 6, dadurch gekennzeichnet, daß sie zusätzlich bis zu 0,5 Gew.-Teile Calciumstearat enthält.

8. Verwendung von sterisch gehinderten Aminen als Wärmestabilisatoren in Polyolefinformmassen, die frei sind von phenolischen Stabilisatoren.

9. Verwendung von 2,2,4,4-Tetramethyl-7-oxa-3,20-diaza-21-oxo-dispiro-[5.1.11.2]-heneicosan gemäß Anspruch 8.

10. Verwendung von Poly-[6-[(1,1,3,3-tetramethylbutyl)amino]-1,3,5-triazin-2,4-diyl]-[(2,2,6,6-tetramethyl-4-piperidinyl)imino]-1,6-hexandiyl-[(2,2,6,6-tetramethyl-4-piperidinyl)imino] (9 Cl) gemäß Anspruch 8.
